## Europäisches Patentamt

## European Patent Office

## Office européen des brevets

(19)

(11) **EP 0 974 822 B1**

(12) **EUROPÄISCHE PATENTSCHRIFT**

(45) Veröffentlichungstag und Bekanntmachung des Hinweises auf die Patenterteilung:
**16.10.2002 Patentblatt 2002/42**

(51) Int Cl.⁷: **G01L 3/12**

(21) Anmeldenummer: **99112914.9**

(22) Anmeldetag: **05.07.1999**

(54) **Drehmomentsensor und Verfahren zum Erzeugen eines drehmomentabhängigen Signals**

Torque sensor and procedure for producing of a torque dependent signal

Capteur de couple et procédé pour réaliser un signal dépendent du couple

(84) Benannte Vertragsstaaten:
**DE FR GB**

(30) Priorität: **24.07.1998 DE 19833358**

(43) Veröffentlichungstag der Anmeldung:
**26.01.2000 Patentblatt 2000/04**

(73) Patentinhaber: **Siemens Aktiengesellschaft 80333 München (DE)**

(72) Erfinder:
- **Porth, Wolfgang 60388 Frankfurt (DE)**
- **Gier, Lothar, Dr. 61231 Bad Nauheim (DE)**

(56) Entgegenhaltungen:
**EP-A- 0 555 987**

**Beschreibung**

Die Erfindung betrifft einen Drehmomentsensor mit einem ersten Signalgeber, dessen Ausgangssignal sich in Abhängigkeit von einem Drehmoment ändert, einem zweiten Signalgeber, dessen Ausgangssignal sich in Abhängigkeit von dem Drehmoment gegenläufig ändert, und einer Auswerteeinrichtung, die eine Summiereinrichtung aufweist, die mit den beiden Signalgebern verbunden ist. Ferner betrifft die Erfindung ein Verfahren zum Erzeugen eines drehmomentabhängigen Signals aus Ausgangssignalen zweier Signalgeber mit gegenläufigem Signalverlauf, bei dem die Summe der Ausgangssignale gebildet wird.

Ein Drehmomentsensor und ein Verfahren zum Erzeugen eines drehmomentabhängigen Signals der oben genannten Art sind aus EP 0 555 987 B1 bekannt. Der bekannte Drehmomentsensor wird in einer hilfskraftunterstützten Fahrzeuglenkung eingesetzt. Er ist zwischen einem Lenkhandrad und einem Lenkgetriebe angeordnet. Auf die gelenkten Räder wirkt ein Motor, der so angesteuert wird, daß das vom Drehmomentsensor ermittelte Drehmoment möglichst klein wird. Die Signalgeber arbeiten optisch. Eine Lichtquelle strahlt durch eine Blendenanordnung auf einen photoelektrischen Bereich, der an einem Ende eines Torsionsstabes angeordnet ist. Die Blendenanordnung ist mit dem anderen Ende des Torsionsstabes verbunden. Wenn ein Drehmoment aufgebracht wird, verwindet sich der Torsionsstab etwas. Dementsprechend verschiebt sich die Blende gegenüber den photoelektrischen Aufnehmern, so daß der erste Aufnehmer eine größere Lichtmenge und der zweite Aufnehmer eine kleinere Lichtmenge als in der Neutralstellung erhält. Dementsprechend ändern sich die Ausgangssignale. Die Differenz der Ausgangssignale wird durch die Summe der Ausgangssignale dividiert, um zu erreichen, daß das drehmomentabhängige Signal unabhängig von Änderungen in der Lichtstärke oder von altersbedingten Änderungen der Bauelemente wird.

Ein anderer Drehmomentsensor ist aus EP 0 765 795 A2 bekannt. Hier werden ebenfalls zwei Signalgeber verwendet, deren Ausgangssignale stellungsabhängig gegenläufig variieren. Die Signalgeber werden von einer Versorgungsspannung gespeist. Die Versorgungsspannung wird nun so geregelt, daß die Summe der beiden Ausgangssignale konstant ist. Auch dieser Drehmomentsensor dient zum Betreiben eines hilfskraftunterstützten Lenksystems.

Der Erfindung liegt die Aufgabe zugrunde, auf einfache Weise ein Drehmomentsignal zu gewinnen.

Diese Aufgabe wird bei einem Drehmomentsensor der eingangs genannten Art dadurch gelöst, daß der erste Signalgeber mit einem Integrator verbunden ist, dessen Ausgang mit einem ersten Eingang eines Komparators verbunden ist, dessen zweiter Eingang mit der Summiereinrichtung verbunden ist, wobei der Ausgang des Komparators mit einem Rücksetzeingang des Integrators und einem Signalausgang des Drehmomentsensors in Verbindung steht.

Bei dieser Ausgestaltung entfällt sowohl ein Regler, der eine Versorgungsspannung auf einem konstanten Wert halten muß, als auch ein Dividierer, der zur Normierung verwendet wird. Am Ausgang des Komparators steht dennoch ein drehmomentabhängiges Signal zur Verfügung. In diesem Fall ist seine Frequenz drehmomentabhängig. Der Integrator integriert das Ausgangssignal des ersten Signalgebers so lange, bis dieses gleich der Summe der beiden Ausgangssignale ist. Solange die Bedingung noch nicht erfüllt ist, hat der Ausgang des Komparators einen ersten Zustand, beispielsweise 5 V oder "high". Sobald die Ausgangsspannung die Summenspannung der Ausgangssignale erreicht hat, geht der Ausgang des Komparators auf "low" beziehungsweise auf 0 V. Dementsprechend entsteht bei jedem Umschalten in eine bestimmte Richtung ein Impuls. Der Komparator setzt dann bei diesem Kippen den Integrator wieder zurück, so daß die Integration von neuem beginnen kann. Es liegt auf der Hand, daß die Frequenz von der Größe des Ausgangssignals des ersten Signalgebers abhängig ist. Bei einem größeren Signal ist die Frequenz höher, weil die Integrationszeit kürzer ist, und bei einem kleineren Signal entsprechend niedriger. Da als Kriterium für das Kippen oder Umschalten des Komparators die Summe der Ausgangssignale verwendet wird, erreicht man eine weitgehende Unabhängigkeit von gleichartigen Änderungen in diesen Signalen, die beispielsweise bauteilbedingt sind.

In einer bevorzugten Ausgestaltung ist der Ausgang des Komparators mit einem Pulsgenerator verbunden. Der Pulsgenerator erzeugt beim Kippen jeweils einen Impuls vorbestimmter Länge. Derartige Impulse können später besser verarbeitet werden.

Vorzugsweise ist die Summiereinrichtung als Summationsverstärker ausgebildet. Sie summiert also nicht nur die Ausgangssignale der beiden Signalgeber, sondern verstärkt diese Summe noch. Damit erhält man längere Interationszeiten und dadurch etwas geringere Frequenzen am Ausgang des Komparators. Mit der Wahl des Verstärkungsfaktors gewinnt man darüber hinaus eine weitere Einflußgröße zur Gestaltung der Frequenz.

Hierbei ist besonders bevorzugt, daß der Verstärkungsfaktor des Summationsverstärkers und die Zeitkonstante des Integrators so gewählt sind, daß sich bei Gleichheit der Ausgangssignale am Ausgang des Komparators ein Signal mit einer Frequenz von mindestens 3 kHz einstellt. Wenn die Ausgangssignale gleich sind, liegt kein Drehmoment an. Eine Frequenz von mindestens 3 kHz läßt sich leicht verarbeiten. Sie läßt nach oben und nach unten noch genügend Abstand, um Drehmomentveränderungen nach oben und nach unten auswerten zu können.

Vorzugsweise ist der Signalausgang mit einer leitungslosen Signalübertragungsstrecke verbunden. Eine derartige leitungslose Signalübertragungsstrecke kann beispielsweise optisch oder mit Funksignalen arbeiten. Da das Ausgangssignal die Information in der Frequenz enthält, ist eine derartige Übertragung in der Regel problemlos möglich. Die leitungslose Signalübertragungsstrecke hat den Vorteil, daß sie auch in rotierenden Bauteilen eingesetzt werden kann. Dieser Fall tritt vor allem bei Lenkungen auf.

Vorzugsweise ist der Eingang des Integrators mit einer zweiten Summiereinrichtung verbunden, deren erster Eingang mit dem ersten Signalgeber und deren zweiter Eingang mit dem Ausgang der ersten Summiereinrichtung verbunden ist. Mit dieser Ausgestaltung kann man eine Offset-Verschiebung der Frequenz realisieren, d.h. man kann die Mittenfrequenz, die ohne Drehmoment erzeugt wird, anheben, so daß auch bei Extremwerten des Drehmoments die Ausgangsfrequenz hoch genug wird, um kurze Meßtakte zuzulassen.

Vorzugsweise ist zwischen den beiden Summiereinrichtungen ein Proportionalitätsglied angeordnet. Dieses Proportionalitätsglied muß nicht als diskretes Bauelement ausgebildet sein. Es kann auch durch einen Rückkopplung gebildet werden, mit der der Verstärkungsfaktor der Summiereinrichtung verändert wird. Der Proportionalitätsfaktor des Proportionalitätsgliedes fließt unmittelbar in den Offset ein, um den die Frequenz verschoben wird. Durch eine entsprechende Wahl dieses Proportionalitätsfaktors läßt sich also die gewünschte Mittenfrequenz relativ genau festlegen.

Vorzugsweise ist zwischen der ersten Summiereinrichtung und dem Komparator ein zweites Proportionalitätsglied angeordnet. Hier gilt im Hinblick auf die Ausbildung das gleiche wie für das erste Proportionalitätsglied, d.h. es kann auch durch eine entsprechende Rückkopplung eines Verstärkers gebildet sein. Mit Hilfe dieses zweiten Proportionalitätsgliedes läßt sich die Steigung der Frequenz über dem Drehmoment einstellen. Damit läßt sich die Empfindlichkeit des Sensors beeinflussen.

In einer besonders bevorzugten Ausgestaltung ist vorgesehen, daß der erste Eingang der zweiten Summiereinrichtung mit dem Ausgang eines Differenzbildners verbunden ist, dessen beide Eingänge mit den beiden Signalgebern verbunden sind, und daß der zweite Eingang der zweiten Summiereinrichtung über ein Proportionalitätsglied mit dem Eingang des Komparators verbunden ist, wobei das Eingangssignal des Komparators aus dem mit einem Verstärkungsfaktor verstärken Summensignal gebildet ist und der Proportionalitätsfaktor des Proportionalitätsgliedes kleiner als 1, aber größer als der Kehrwert des Verstärkungsfaktors ist. Bei dieser Ausgestaltung kann man die Frequenzsteigung und den Frequenz-Offset unabhängig voneinander einstellen.

Vorzugsweise ist der zweite Signalgeber mit einem zweiten Integrator mit nachgeschaltetem zweiten Komparator verbunden, wobei eine Überwachungseinrichtung vorgesehen ist, die die Summe der Frequenzen an den Ausgängen der Komparatoren auf Konstanthalt überprüft. Diese Ausgestaltung ist besonders beim Einsatz in sicherheitsrelevanten Anwendungen vorteilhaft. Die Funktion der Schaltung ist diagnosefähig. Weil die Ausgangssignale der Signalgeber komplementär zueinander verlaufen, bleibt die Frequenzsumme am Ausgang der Komparatoren konstant und gleich der doppelten Frequenz des Drehmoment-Null-Signals. Kleinere Schwankungen sind natürlich zugelassen. Wenn jedoch die Frequenzsumme einen vorbestimmten Korridor verläßt, ist dies ein relativ sicheres Zeichen für das Auftreten eines Fehlers.

Die Aufgabe wird bei einem Verfahren der eingangs genannten Art dadurch gelöst, daß ein Ausgangssignal integriert wird, bis das integrierte Signal der Summe der Ausgangssignale entspricht.

Wie oben im Zusammenhang mit dem Sensor ausgeführt, erhält man bei dieser Ausgestaltung ein Signal, dessen Frequenz proportional zum Drehmoment ist. Durch die Wahl der Summe der Ausgangssignale als Bezugsgröße für das Ende der Integration wird man von gleichlaufenden Änderungen in den einzelnen Ausgangssignalen weitgehend unabhängig.

Die Erfindung wird im folgenden anhand von bevorzugten Ausführungsbeispielen in Verbindung mit der Zeichnung näher beschrieben. Hierin zeigen:

Fig. 1 eine schematische Querschnittsansicht des mechanischen Aufbaus eines Drehmomentsensors,

Fig. 2 eine Draufsicht auf den Drehmomentsensor,

Fig. 2a einen vergrößerten Ausschnitt von Fig. 2,

Fig. 3 eine Schaltungsanordnung zum Erzeugen eines drehmomentabhängigen Signals,

Fig. 4 eine abgewandelte Ausführungsform der Schaltungsanordnung und

Fig. 5 eine weitere Abwandlung der Schaltungsanordnung.

Ein Drehmomentsensor 1 ist im vorliegenden Ausführungsbeispiel auf einer Lenksäule 2 eines Kraftfahrzeugs montiert, die hier nur ausschnittsweise dargestellt ist. Die Lenksäule 2 weist einen ersten Abschnitt 3 auf, der mit dem Lenkhandrad in Verbindung steht, und einen zweiten Abschnitt 4, der zu einem Lenkgetriebe führt. Dazwischen ist als Meßwelle 5 ein Torsionsstab angeordnet, der gegenüber den beiden Abschnitten 3, 4 der Lenksäule 2 einen verminderten Durchmesser aufweist. Wenn die Lenksäule 2 vom Lenkhandrad 4 mit einem Drehmoment beaufschlagt wird, dann verwindet sich die Meßwelle 5 etwas.

An einem Ende der Meßwelle 5 ist eine Platte 6 mit einer Detektoranordnung 7 angeordnet. Am anderen Ende der Meßwelle 5 ist eine Hülse 8 befestigt, die an ihrer der Platte 6 benachbarten Seite ebenfalls eine Platte 9 trägt, die etwa den gleichen Durchmesser wie die Platte 6 aufweist. In der Platte 9 befindet sich eine Blendenöffnung 10, die der Detektoranordnung 7 gegenüberliegt. Die Hülse 8 ist auf der Meßwelle 5 mit Hilfe von Lagern 11 abgestützt.

Eine schematisch dargestellte Lampe 12, die auch durch Leuchtdioden oder ähnliches gebildet sein kann und in der Regel dichter an der Platte 9 angeordnet ist, leuchtet durch die Blendenöffnung 10 auf die Detektoranordnung 7.

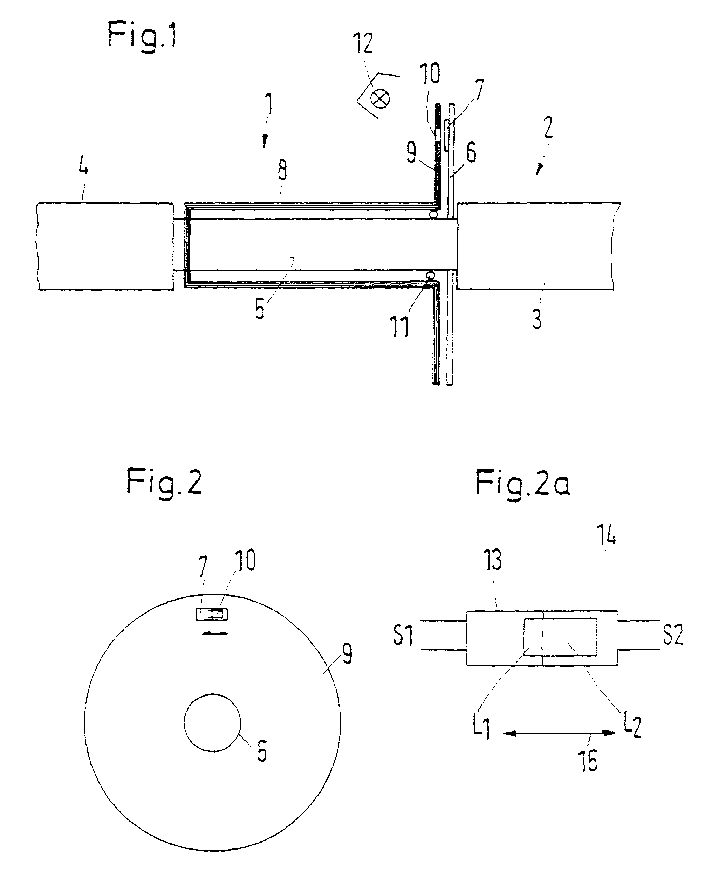

Die Detektoranordnung 7 ist in Fig. 2 auf der Platte 6 dargestellt. Fig. 2a zeigt eine vergrößerte Ansicht.

Die Detektoranordnung 7 besteht aus zwei Photoempfängern 13, 14, die in Abhängigkeit von dem Lichtstrom L1, L2, der auf sie trifft, Ausgangssignale S1, S2 erzeugen. Dementsprechend werden die Photoempfänger 13, 14 auch als Signalgeber bezeichnet.

In Abhängigkeit von der Größe und der Richtung des Drehmoments, mit dem die Lenksäule 2 belastet wird, verschiebt sich die Blendenöffnung 10 in Richtung des Doppelpfeils 15 über den Photoempfänger 13, 14. Bei ansonsten gleichen Bedingungen, beispielsweise gleichem Aufbau, nimmt daher das Signal S1 in dem Maße ab, wie das Signal S2 zunimmt. Aus den Signalen S1 und S2 läßt sich also über die Änderung der Positionen der Platten 6, 9 relativ zueinander ein Rückschluß auf das aufgebrachte Drehmoment ziehen.

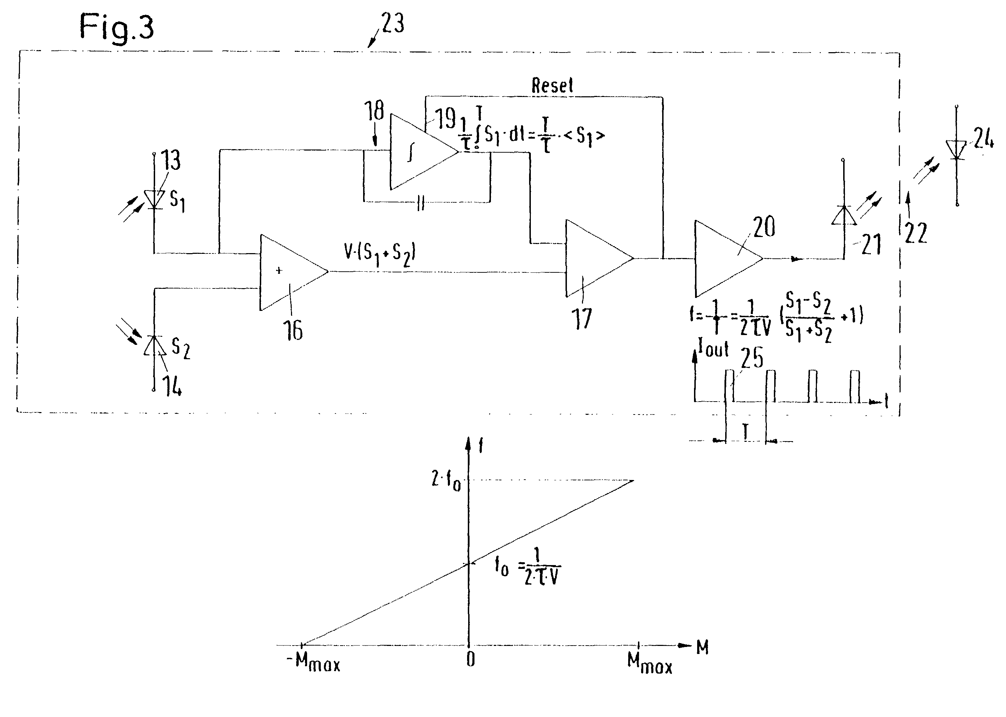

Fig. 3 zeigt eine Schaltungsanordnung 16, mit der aus den Signalen S1, S2 ein Ausgangssignal gewonnen werden kann, dessen Frequenz f dem aufgebrachten Drehmoment proportional ist.

Die beiden Signalgeber 13, 14 sind mit einem Addierer 16 verbunden, dessen Ausgang mit einem Komparator 17 verbunden ist. Der Addierer 16 ist als Summationsverstärker mit einem Verstärkungsfaktor V ausgebildet. Der Signalgeber 13 ist darüber hinaus mit dem Eingang eines Integrators 18 verbunden, dessen Ausgang mit dem anderen Eingang des Komparators 17 in Verbindung steht. Der Ausgang des Komparators 17 ist einerseits auf einen Rücksetzeingang 19 des Integrators 18 geführt, andererseits steht er mit dem Eingang eines Pulsgenerators 20 in Verbindung. Der Pulsgenerator 20 steht mit einem Sender 21 einer leitungslosen Übertragungsstrecke 22 in Verbindung, über die das Ausgangssignal der Schaltungsanordnung 23 zu einem Empfänger 24 gesendet werden kann. Beispielsweise kann der Sender als Infrarotleuchtdiode ausgebildet sein und der Empfänger 24 als Photoempfänger. Es ist aber auch möglich, die Signale mit Hilfe von anderen elektromagnetischen Wellen leitungslos zu übertragen. Damit ist es möglich, auch bei einer stärkeren Verdrehung der Lenksäule 2, wie sie beim Lenken eines Kraftfahrzeugs vorkommt, die Drehmomentsignale ohne Leitungsprobleme zu übertragen.

Die Schaltungsanordnung 23 arbeitet wie folgt: Der Integrator 18 hat eine Zeitkonstante $\tau$. Wenn man davon ausgeht, daß das Signal S1 des Signalgebers 13 über eine ausreichend lange Zeit konstant ist, dann ist das Ausgangssignal des Integrators gleich $(T/\tau)\cdot S1$. Damit ist die Integratorausgangsspannung proportional zur Photospannung und damit zum Lichtstrom L1 auf den Photoempfänger 13 und zur Integrationszeit T, wenn $u_{int}$ zu Beginn der Integration auf den Wert 0 gesetzt wurde.

Dem anderen Eingang des Komparators 17 wird die verstärkte Summenspannung $V\cdot(S1+S2)$ zugeführt. Solange die Summenspannung größer ist als die Integratorausgangsspannung, ist der Komparatorausgang logisch hoch, z.B. auf 5 V. Er kippt dann, wenn die Integratorausssgangsspannung gleich der verstärkten Summenspannung ist. Dies läßt sich mathematisch folgendermaßen ausdrücken:

$$^{T}/_{\tau} \cdot S1 = V \cdot (S1 + S2)$$

$$T = V \cdot \tau \cdot \frac{S1 + S2}{S1}$$

Wenn der Komparator kippt, wird die Ausgangsspannung logisch niedrig, beispielsweise 0 V. In diesem Augenblick wird der Integrator zurückgesetzt und die Integration beginnt von neuem. Am Ausgang des Komparators 17 erscheint ein Signal mit einer Frequenz f = 1/T.

$$f = \frac{1}{T} = \frac{1}{\tau \cdot V} \frac{S1}{S1 + S2} = \frac{1}{2\tau V} \frac{2 \cdot S1}{S1 + S2} = \frac{1}{2\tau V} \frac{S1 - S2 + S1 + S2}{S1 + S2} = \frac{1}{2\tau V} \left( \frac{S1 - S2}{S1 + S2} + 1 \right)$$

Diese Frequenz ist in Abhängigkeit vom Drehmoment M graphisch aufgetragen.

Der Pulsgenerator 20 erzeugt mit dieser Frequenz Strompulse 25, die an den Sender 21 weitergeleitet werden.

Setzt man für die Verstärkung V = 10 und für die Zeitkonstante $\tau$ = 10 µs an, dann ergibt sich eine Mittelfrequenz $f_0$ von 5 kHz. Durch eine entsprechende Wahl der beiden Größen läßt sich die Mittelfrequenz, also die Frequenz, die sich ergibt, wenn kein Moment anliegt, variieren.

Bei dieser Ausgestaltung ergeben sich allerdings bei großen negativen Momenten sehr kleine Frequenzen, bei denen die Zyklus- oder Auswertezeiten sehr lang werden können.

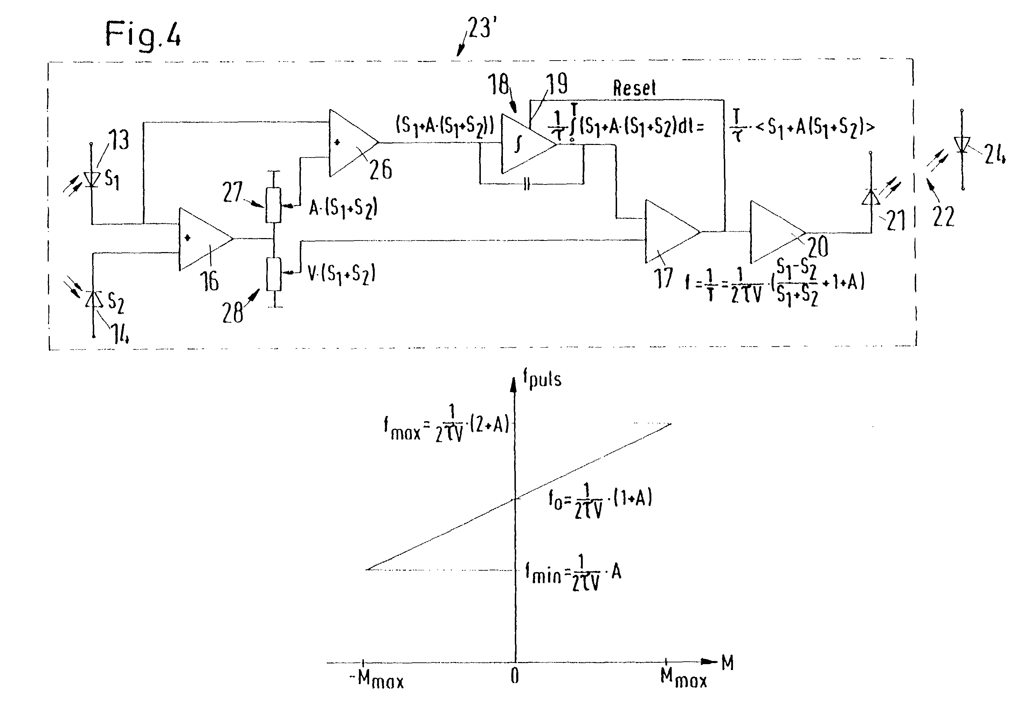

Fig. 4 zeigt eine veränderte Ausgestaltung, bei der man einen Frequenz-Offset erreicht.

Gleiche Teile wie in Fig. 3 sind mit den gleichen Bezugszeichen versehen.

Hinzugekommen ist ein zweiter Addierer 26, dessen Ausgang mit dem Eingang des Integrators 18 verbunden ist. Der zweite Addierer 26 kann ebenfalls einen Verstärkungsfaktor aufweisen, der aber für die folgende Betrachtung weggelassen wird.

Ein Eingang des Addierers 26 ist mit dem Signalgebers 13 verbunden. Der andere Eingang des Addierers 26 ist Ein Eingang des Addierers 26 ist mit dem Signalgebers 13 verbunden. Der andere Eingang des Addierers 26 ist mit einem ersten Proportionalitätsglied 27 verbunden, das hier als ohmscher Widerstand mit Mittelabgriff dargestellt ist. Das Proportionalitätsglied 27 seinerseits ist mit dem Ausgang des ersten Addierers 16 verbunden.

Der Begriff des Proportionalitätsgliedes soll hier funktional verstanden werden. Es versorgt die Summationsspannung S1+S2 mit einem Proportionalitätsfaktor, der kleiner oder auch größer als 1 sein kann. Dementsprechend kann das Proportionalitätsglied auch durch eine Rückkopplung auf einen Operationsverstärker gebildet sein, der den ersten Addierer 16 bildet. Im vorliegenden Fall ist er größer als 1.

In ähnlicher Weise ist der Eingang des Komparators 17 über ein zweites Proportionalitätsglied 28 mit Verstärkungsfaktor V mit dem Ausgang des ersten Addierers 16 verbunden.

Die Bedingung für das Umschalten oder Kippen des Komparators lautet nun

$$ ^T/_\tau \cdot (S1 + A \cdot (S1 + S2)) = V(S1 + S2) $$

Ähnlich zu der oben angegebenen Umformung ergibt sich daraus dann

$$ f = \frac{1}{T} = \frac{1}{2\tau V} \cdot \left( \frac{S1 - S2}{S2 + S2} + 1 + A \right) $$

Die sich daraus ergebende Abhängigkeit der Frequenz f vom Drehmoment M ist in den Graph unter der Schaltungsanordnung 23' aufgetragen.

Wenn man beispielsweise den Verstärkungsfaktor V = 10, die Zeitkonstante $\tau$ = 10 µs und den Verstärkungsfaktor A = 2 setzt, dann ergeben sich für die minimale Frequenz $f_{min}$ = 10 kHz, für die maximale Frequenz $f_{max}$ = 20 kHz und für die Mittelfrequenz $f_o$ = 15 kHz.

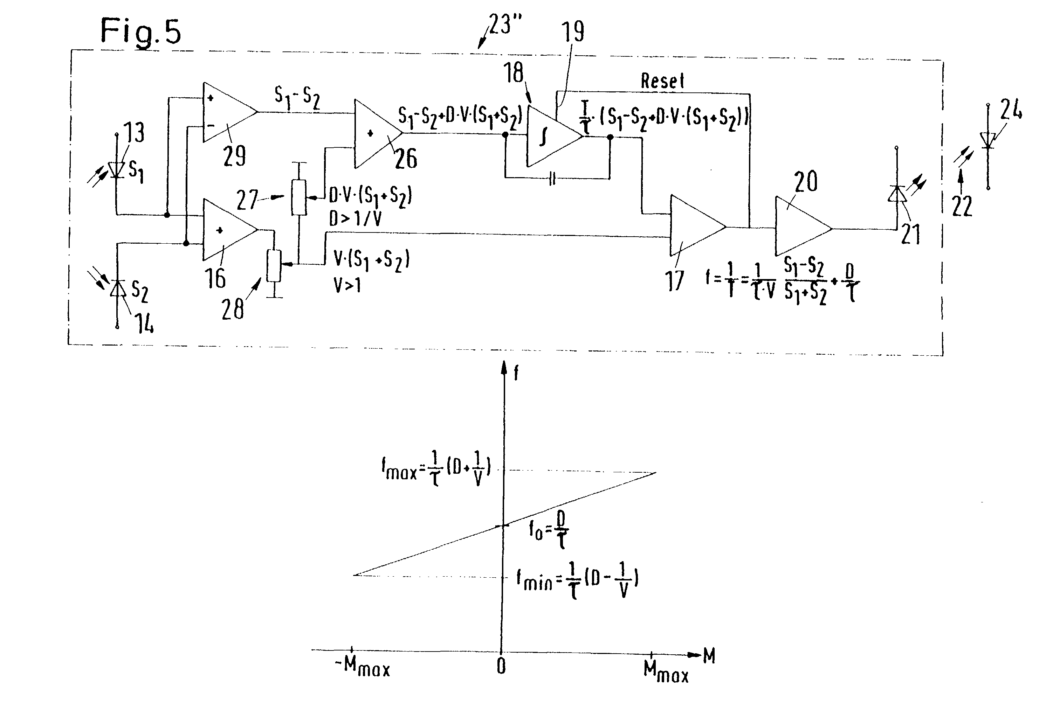

Fig. 5 zeigt eine weitere Schaltungsanordnung 23", mit der nicht nur der Frequenz-Offset verändert werden kann, sondern auch die Steigung der Frequenz über dem Drehmoment, und zwar unabhängig von dem Offset.

Gleiche Teile sind mit den gleichen Bezugszeichen wie in Fig. 4 versehen.

Dem ersten Eingang des zweiten Addierers 26 wird nun nicht mehr das Ausgangssignal des ersten Signalgebers 13 zugeführt, sondern die Differenz S1-S2 der Ausgangssignale der beiden Signalgeber 13, 14.

Ferner ist das erste Proportionalitätsglied nicht mehr direkt mit dem Ausgang des ersten Addierers 16 verbunden, sondern mit dem Eingang des Komparators 17, so daß es nicht nur die Summe S1+S2 mit einem Proportionalitätsfaktor P versieht, sondern die verstärkte Summe V·(S1+S2).

Für die Verstärkungs- oder Proportionalitätsfaktoren D, V gilt

$$ 1/V < 1 \quad D < 1 $$

Die Umschaltbedingung für den Komparator 17 lautet T/$\tau$ · (S1-S2+D·V·(S1+S2))=V(S1+S2). Daraus ergibt sich

$$ f = \frac{1}{T} = \frac{1}{\tau \cdot V} \cdot \frac{S1 - S2}{S1 + S2} + \frac{D}{\tau} $$

Der sich daraus ergebende Verlauf der Frequenz f über den Drehmoment M ist in dem Graph unterhalb der Schaltungsanordnung 23" aufgetragen. Hieraus ergeben sich auch die Grenzwerte.

In nicht näher dargestellter Weise kann man nun zu Kontroll- oder Selbstdiagnosezwecken auch den Ausgang des zweiten Signalgebers 14 mit einem Integrator und einem Komparator versehen. Der Addierer 16 kann gegebenenfalls für beide Signalgeber 13, 14 gemeinsam verwendet werden. Es ist aber auch möglich, das Ausgangssignal S2 des zweiten Signalgebers 14 in einer identischen Schaltung weiterzuverarbeiten.

Da das Signal S1 komplementär zum Signal S2 verläuft, ergibt sich dann für das zweite Signal S2 eine Frequenz f2, wobei gilt f1+f2=2$f_0$, d.h. die Summenfrequenz ist gleich der doppelten Frequenz des Drehmoment-Nullsignals.

**Patentansprüche**

1. Drehmomentsensor mit einem ersten Signalgeber, dessen Ausgangssignal sich in Abhängigkeit von einem Drehmoment ändert, einem zweiten Signalgeber, dessen Ausgangssignal sich in Abhängigkeit von dem Drehmoment gegenläufig ändert, und einer Auswerteeinrichtung, die eine Summiereinrichtung aufweist, die mit den beiden Signalgebern verbunden ist, **dadurch gekennzeichnet, daß** der erste Signalgeber (13) mit einem Integrator (18) verbunden ist, dessen Ausgang mit einem ersten Eingang eines Komparators (17) verbunden ist, dessen zweiter Eingang mit der Summiereinrichtung (16) verbunden ist, wobei der Ausgang des Komparators (17) mit einem Rücksetzeingang (19) des Integrators (18) und einem Signalausgang des Drehmomentsensors in Verbindung steht.

2. Sensor nach Anspruch 1, **dadurch gekennzeichnet, daß** der Ausgang des Komparators (17) mit einem Pulsgenerator (20) verbunden ist.

3. Sensor nach Anspruch 1 oder 2, **dadurch gekennzeichnet, daß** die Summiereinrichtung (16) als Summationsverstärker ausgebildet ist.

4. Sensor nach Anspruch 3, **dadurch gekennzeichnet, daß** der Verstärkungsfaktor (V) des Summationsverstärkers (16) und die Zeitkonstante (τ) des Integrators (18) so gewählt sind, daß sich bei Gleichheit der Ausgangssignale (S1, S2) am Ausgang des Komparators (17) ein Signal mit einer Frequenz (f) von mindestens 3 kHz einstellt.

5. Sensor nach einem der Ansprüche 1 bis 4, **dadurch gekennzeichnet, daß** der Signalausgang mit einer leitungslosen Signalübertragungsstrecke (22) verbunden ist.

6. Sensor nach einem der Ansprüche 1 bis 5, **dadurch gekennzeichnet, daß** der Eingang des Integrators (18) mit einer zweiten Summiereinrichtung (26) verbunden ist, deren erster Eingang mit dem ersten Signalgeber (13) und deren zweiter Eingang mit dem Ausgang der ersten Summiereinrichtung (16) verbunden ist.

7. Sensor nach Anspruch 6, **dadurch gekennzeichnet, daß** zwischen den beiden Summiereinrichtungen (16, 26) ein Proportionalitätsglied (27) angeordnet ist.

8. Sensor nach Anspruch 7, **dadurch gekennzeichnet, daß** zwischen der ersten Summiereinrichtung (16) und dem Komparator (17) ein zweites Proportionalitätsglied (28) angeordnet ist.

9. Sensor nach einem der Ansprüche 6 bis 8, **dadurch gekennzeichnet, daß** der erste Eingang der zweiten Summiereinrichtung (26) mit dem Ausgang eines Differenzbildners (29) verbunden ist, dessen beide Eingänge mit den beiden Signalgebern (13, 14) verbunden sind, und daß der zweite Eingang der zweiten Summiereinrichtung (26) über ein Proportionalitätsglied (27) mit dem Eingang des Komparators (17) verbunden ist, wobei das Eingangssignal des Komparators (17) aus dem mit einem Verstärkungsfaktor (V) verstärken Summensignal (S1+S2) gebildet ist und der Proportionalitätsfaktor (D) des Proportionalitätsgliedes (27) kleiner als 1, aber größer als der Kehrwert des Verstärkungsfaktors (V) ist.

10. Sensor nach einem der Ansprüche 1 bis 9, **dadurch gekennzeichnet, daß** der zweite Signalgeber (14) mit einem zweiten Integrator mit nachgeschaltetem zweiten Komparator verbunden ist, wobei eine Überwachungseinrichtung vorgesehen ist, die die Summe der Frequenzen an den Ausgängen der Komparatoren auf Konstanthalt überprüft.

11. Verfahren zum Erzeugen eines drehmomentabhängigen Signals aus Ausgangssignalen zweier Signalgeber mit gegenläufigem Signalverlauf, bei dem die Summe der Ausgangssignale gebildet wird, **dadurch gekennzeichnet,**

**daß** ein Ausgangssignal integriert wird, bis das integrierte Signal der Summe der Ausgangssignale entspricht.

**Claims**

1.  Torque sensor having a first signal transmitter whose output signal varies as a function of a torque, a second signal transmitter whose output signal varies in the opposite direction as a function of the torque and an evaluation device which has a summing device which is connected to the two signal transmitters, **characterized in that** the first signal transmitter (13) is connected to an integrator (18) whose output is connected to a first input of a comparator (17) whose second input is connected to the summing device (16), the output of the comparator (17) being connected to a resetting input (19) of the integrator (18) and to a signal output of the torque sensor.

2.  Sensor according to Claim 1, **characterized in that** the output of the comparator (17) is connected to a pulse generator (20).

3.  Sensor according to Claim 1 or 2, **characterized in that** the summing device (16) is embodied as a summing amplifier.

4.  Sensor according to Claim 3, **characterized in that** the gain factor (V) of the summing amplifier (16) and the time constant (τ) of the integrator (18) are selected such that given equivalence of the output signals (S1, S2) at the output of the comparator (17) a signal with a frequency (f) of at least 3 kHz is obtained.

5.  Sensor according to one of Claims 1 to 4, **characterized in that** the signal output is connected to a wireless signal transmission link (22).

6.  Sensor according to one of Claims 1 to 5, **characterized in that** the input of the integrator (18) is connected to a second summing device (26) whose first input is connected to the first signal transmitter (13) and whose second input is connected to the output of the first summing device (16).

7.  Sensor according to Claim 6, **characterized in that** a proportionality element (27) is arranged between the two summing devices (16, 26).

8.  Sensor according to Claim 7, **characterized in that** a second proportionality element (28) is arranged between the first summing device (16) and the comparator (17).

9.  Sensor according to one of Claims 6 to 8, **characterized in that** the first input of the second summing device (26) is connected to the output of a difference former (29) whose two inputs are connected to the two signal transmitters (13, 14), and **in that** the second input of the second summing device (26) is connected to the input of the comparator (17) via a proportionality element (27), the input signal of the comparator (17) being formed from the composite signal (S1+S2) which is amplified with a gain factor (V), and the proportionality factor (D) of the proportionality element (27) is less than 1 but greater than the reciprocal value of the gain factor (V).

10. Sensor according to one of Claims 1 to 9, **characterized in that** the second signal transmitter (14) is connected to a second integrator with a second comparator arranged downstream, a monitoring device being provided which checks the sum of the frequencies at the outputs of the comparators for constancy.

11. Method for generating a torque-dependent signal from output signals of two signal transmitters with signal profiles in opposite directions, in which the sum of the output signals is formed, **characterized in that** an output signal is integrated until the integrated signal corresponds to the sum of the output signals.

**Revendications**

1.  Capteur de couple, avec un premier émetteur de signal, dont le signal de sortie varie en fonction d'un couple, un deuxième émetteur de signal dont le signal de sortie varie en sens inverse en fonction du couple, et un dispositif d'évaluation, présentant un dispositif sommateur, relié aux deux émetteurs de signaux, **caractérisé en ce que** le premier émetteur de signal (13) est relié à un intégrateur (18), dont la sortie est reliée à une première entrée d'un comparateur (17), dont la deuxième entrée est reliée au dispositif sommateur (16), la sortie du comparateur (17) étant reliée à une entrée de remise à l'état initial (19) de l'intégrateur (18) et à une sortie de signal du capteur de couple.

2. Capteur selon la revendication 1, **caractérisé en ce que** la sortie du comparateur (17) est reliée à un générateur d'impulsions (20).

3. Capteur selon la revendication 1 ou 2, **caractérisé en ce que** le dispositif sommateur (16) est réalisé sous la forme d'amplificateur sommateur.

4. Capteur selon la revendication 3, **caractérisé en ce que** le facteur d'amplification (V) de l'amplificateur sommateur (16) et la constante de temps ($\tau$) de l'intégrateur (18) sont choisis de manière qu'en cas d'égalité des signaux de sortie (S1, S2) à la sortie du comparateur (17) s'établisse un signal ayant une fréquence (f) d'au moins 3 kHz.

5. Capteur selon l'une des revendications 1 à 4, **caractérisé en ce que** la sortie de signal est reliée à un trajet de transmission de signal (22) sans conducteur.

6. Capteur selon l'une des revendications 1 à 5, **caractérisé en ce que** l'entrée de l'intégrateur (18) est reliée à un deuxième dispositif sommateur (26), dont la première entrée est reliée au premier émetteur de signal (13) et dont la deuxième entrée est reliée à la sortie du premier dispositif sommateur (16).

7. Capteur selon la revendication 6, **caractérisé en ce qu'**un élément de proportionnalité (27) est disposé entre les deux dispositifs sommateurs (16, 26).

8. Capteur selon la revendication 7, **caractérisé en ce qu'**entre le premier dispositif sommateur (16) et le comparateur (17) est disposé un deuxième élément de proportionnalité (28).

9. Capteur selon l'une des revendications 6 à 8, **caractérisé en ce que** la première sortie du deuxième dispositif sommateur (28) est reliée à la sortie d'un formateur de différence (29), dont les deux entrées sont reliées aux deux émetteurs de signaux (13, 14), et **en ce que** la deuxième entrée du deuxième dispositif sommateur (26) est reliée, par l'intermédiaire d'un élément de proportionnalité (27), à l'entrée du comparateur (17), le signal d'entrée du comparateur (17) étant formé du signal de somme (S1+S2) amplifié par le facteur d'amplification (V), et le facteur de proportionnalité (D) de l'élément de proportionnalité (27) étant inférieur à 1, mais supérieur à l'inverse du facteur d'amplification (V).

10. Capteur selon l'une des revendications 1 à 9, **caractérisé en ce que** le deuxième émetteur de signal (14) est relié à un deuxième intégrateur, en aval duquel est branché un deuxième comparateur, un dispositif de surveillance étant prévu, vérifiant le maintien à une valeur constante de la somme des fréquences aux sorties des comparateurs.

11. Procédé de production d'un signal dépendant du couple, à partir de signaux de sortie provenant de deux émetteurs de signaux ayant une allure de signal évoluant en sens inverses, pour lequel on forme la somme des signaux de sortie, **caractérisé en ce qu'**un signal de sortie est intégré jusqu'à ce que le signal intégré corresponde à la somme des signaux de sortie.

Fig.1

Fig.2

Fig.2a

Fig.3

$$i = \frac{1}{\tau} = \frac{1}{2\tau V}\left(\frac{S_1 - S_2}{S_1 + S_2} + 1\right)$$

$I_{out}$

$$\frac{1}{\tau}\int_0^\tau S_1 \cdot dt = \frac{1}{\tau} \cdot \langle S_1 \rangle$$

Reset

$V \cdot (S_1 + S_2)$

$S_1$

$S_2$

$2 \cdot t_0$

$t_0 = \frac{1}{2\tau V}$

$-M_{max}$

$M_{max}$

$M$

0

Fig.4

Fig.5